# EUROPEAN PATENT SPECIFICATION

(11) **EP 2 202 467 B1**
(45) Date of publication and mention of the grant of the patent: **20.02.2019**
(21) Application number: 09252899.1
(22) Date of filing: 23.12.2009
(51) Int. Cl.: F24F 11/00, F24F 3/14

(54) **ROTARY TYPE HEAT EXCHANGE APPARATUS WITH AUTOMATIC FLOW RATE EXCHANGE MODULATION**
DREHBARE WÄRMETAUSCHERVORRICHTUNG MIT AUTOMATISCHER DURCHFLUSSRATEN-AUSTAUSCHMODULATION
APPAREIL D'ECHANGE THERMIQUE DE TYPE ROTATIF DOTÉ D'UNE MODULATION AUTOMATIQUE DE L'ÉCHANGE DE DÉBIT

(30) Priority: 23.12.2008 US 318197
(43) Date of publication of application: 30.06.2010
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- EP-A1- 1 731 212
- JP-A- 2004 257 588
- JP-A- 2004 275 924
- US-A- 4 887 438
- US-A- 4 926 618
- US-A- 5 887 784
- US-A1- 2002 139 514
- US-A1- 2005 262 862
- US-A1- 2008 108 295

## Description

### BACKGROUND OF THE INVENTION

### (a) Field of the invention

The present invention improves the conventional rotary type double flow circuit heat exchange apparatus to have the operating function of automatic exchange fluid flow rate modulation so as to timely change the temperature distribution status between the fluid and the heat exchange rotating disk, or to modulate the composition ratio of the gaseous or liquid state pumping fluid, wherein the heat exchange rotating disk inside the rotary type heat exchange apparatus being insertingly installed or coated with penetrating type or absorbing type moisture absorbing material, or the heat exchange rotating disk itself having the concurrent dehumidification function constitute the dehumidification effect of the total heat exchange function.

### (b) Description of the Prior Art

The conventional double flow circuit heat reclaim device or total heat reclaim device for passing through by the gaseous or liquid state pumping fluid include:
(1) The fixed type fluid heat reclaim device;
(2) The fixed type fluid total heat reclaim device;
(3) The rotary type fluid heat reclaim device;
(4) The rotary type fluid total heat reclaim device.

Said heat reclaim devices are usually selected to operate at a set flow speed, hence its heat exchange efficiency is affected by the temperature difference between input and output sides, or the fluid composition difference between the spaces of the exchange gaseous or liquid state fluids, or the difference of fluid speeds and the temperature difference between the spaces of the exchange gaseous or liquid state fluids; further, the conventional heat exchangers are unable to modulate the heat exchange flow rate so as to modulate the fluid composition difference between the spaces of the exchange gaseous or liquid state fluids, as well as have the automatic modulation function to proactively modulate the heat exchange flow rate thereby achieving energy saving effect by matching with the temperature difference or humidity difference.

US 2008/108295 A1 discloses control systems for recovery wheels, ventilation systems with recovery devices, buildings having ventilation, and methods of controlling recovery wheels and controlling or modifying ventilation systems. A parameter of ventilation systems or recovery devices, such as the speed of a recovery wheel, may be controlled as a function of pressure, differential pressure, flow rate, or fan speed, for example, to provide appropriate purge flow to maintain purge effectiveness and limit the carry-over of contaminants from a return/exhaust airstream to an outside/supply airstream, for instance, in a variable air-volume system. In some embodiments, temperature and humidity are measured, and wheel speed is also controlled as a function of these measurements.

EP 1731212 A1 discloses a gas purifier which includes an air passage. An adsorption elimination device, which includes a regenerable adsorbent for adsorbing chemical contaminants from non-purified air and separating the adsorbed contaminants through a regeneration process, and a gas purification unit, which performs gas-liquid contact with a porous film to separate and eliminate contaminants from the non-purified air into a liquid, are arranged in an air passage. The chemical contaminants are adsorbed and eliminated by the adsorption elimination device.

### SUMMARY OF THE INVENTION

The present invention discloses a rotary type heat exchange apparatus in accordance with claim 1.

### BRIEF DESCRIPTION OF THE DRAWINGS

Fig. 1 is a schematic view showing the operating principles of the conventional rotary type total heat exchange apparatus.
Fig. 2 is a schematic view of the conventional rotary type total heat exchange apparatus having two fluid streams in different flow directions to pass through different positions of the rotary type total heat exchange rotating disk.
Fig. 3 is a block schematic view of an example, not being part of the invention, showing the present invention is capable of automatically operatively controlling the flow rate of heat exchange fluid.
Fig. 4 is a block schematic view of an example, not being part of the invention, showing that the present invention is further installed with the temperature detecting device to operatively control the flow rates of the heat exchange fluids.
Fig. 5 is a block schematic view of an example, not being part of the invention, showing that the present invention is further installed with the temperature detecting device and humidity detecting device.
Fig. 6 is a schematic view of an embodiment including a temperature detecting device and gaseous or liquid state composition detecting device to operatively control the flow rates of the heat exchange fluids.
Fig. 7 is a schematic view of an embodiment including a temperature detecting device, humidity detecting device and gaseous or liquid state composition detecting device to operatively control the flow rates of the total heat exchange fluids.

### DESCRIPTION OF MAIN COMPONENT SYMBOLS

11: Temperature detecting device
21: Humidity detecting device
31: Gaseous or liquid state fluid composition detecting device
100: Rotary type heat exchange rotating disk
110: Rotating disk rotationally driving device
111: Variable speed transmission device
120a 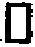 120b: Unidirectional fluid pump
123: Double flow circuit fluid pumping device
130: Heater
200: Rotary type total heat exchange rotating disk
300: Power source
250: Operative control device
1000: Rotary type heat exchange apparatus
a, b, c, d: Fluid port

### DETAILED DESCRIPTION OF THE PREFERRED EMBODIMENTS

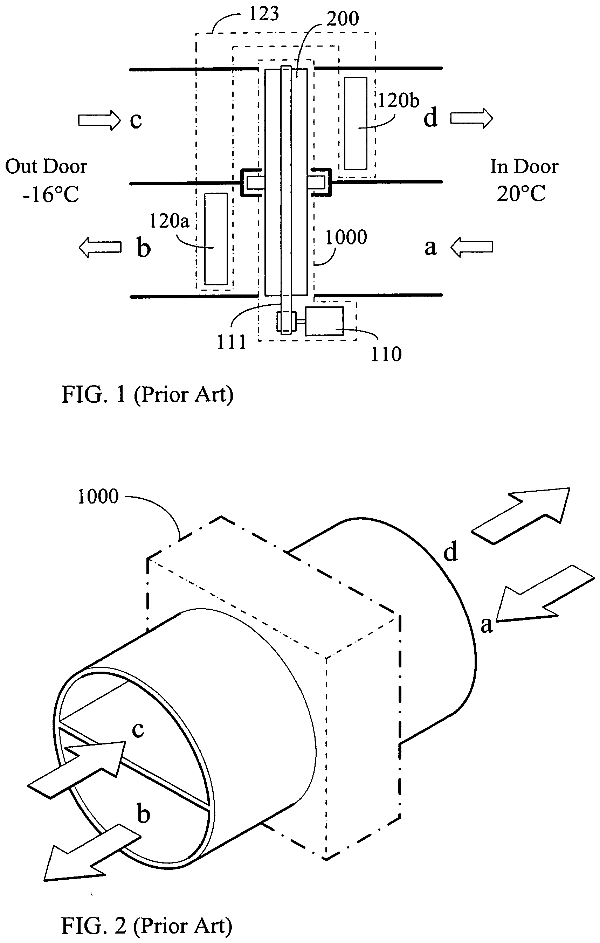

The warming energy reclaim effectiveness of the conventional rotary type heat exchange apparatus or rotary type total heat exchange apparatus has very wide range of applications, and the more representative rotary type total heat exchange apparatus is taken as the example herein, such as that Fig. 1 is a schematic view showing the operating principles of the conventional rotary type total heat exchange apparatus; as shown in Fig. 1, the conventional rotary type total heat exchange apparatus usually installed with two fluid pumping devices in different flow directions and four fluid ports for pumping the two fluid streams of temperature difference in different flow directions through the two sides of the rotary type total heat exchange rotating disk (200) inside the conventional total heat exchange apparatus, wherein the two fluid streams are respectively pumped in through the two fluid ports at different sides and are respectively discharged through the fluid port at the other side, so as the two fluid circuits are segregated to pass through the rotationally driven rotary type total heat exchange rotating disk (200) at different positions, such as that Fig. 2 is a schematic view of the conventional rotary type total heat exchange apparatus having two fluid streams in different flow directions to pass through different positions of the rotary type total heat exchange rotating disk (200); such as that by taking the example of the heat exchange apparatus for indoor to outdoor air exchange in winter times, the indoor higher temperature air flow is pumped into the conventional rotary type total heat exchange apparatus via the fluid port (a), and passes through the fluid circuit of the rotary type total heat exchange rotating disk (200) on one side, and then is discharged to the outside via the fluid port (b), and the lower temperature outdoor fresh air is pumped into the conventional rotary type total heat exchange apparatus via the fluid port (c) from the outside, passes through the fluid circuit of the rotary type total heat exchange rotating disk (200) on the other side, and then is discharged into indoors via the fluid port (d), wherein the fluid port (a) and the fluid port (d) are disposed at the side passing to the inside, while the fluid port (c) and the fluid port (b) are disposed at the side passing to the outside; in stable operation, one side of the rotary type total heat exchange rotating disk (200) in the conventional rotary type total heat exchange apparatus between the fluid port (a) and the fluid port (b) forms the temperature distribution from the higher temperature at the fluid port (a) to gradually reduce to the lower temperature at the fluid port (b) and the other side of the rotary type total heat exchange rotating disk (200) between the fluid port (c) and the fluid port (d) forms the temperature distribution from the lower temperature at the fluid port (c) to gradually increased to the higher temperature at the fluid port (d), while the heat exchange efficiency is decided by the fluid property, flow speed and characteristics of the heat exchange rotating disk in the heat exchange apparatus as well as the temperature difference of the two side fluids; if the heat exchange rotating disk being insertingly installed or coated with penetrating type, or absorbing type moisture absorbing material or the heat exchange rotating disk itself having the concurrent dehumidification function are applied to constitute the total heat exchange rotating disk, then the above said two fluid streams in different flow directions are formed with the stable status of temperature difference and humidity saturation difference at the two inlet/outlet ends and the two sides for passing by the fluids in different flow directions of the rotary type total heat exchange rotating disk (200) inside the conventional rotary type total heat exchange apparatus. In this example it is disclosed that the conventional rotary type double flow circuit heat exchange apparatus is further made to have the operating function of the rotary type heat exchange apparatus having automatic exchange fluid flow rate modulation thereby modulating the flow rate, temperature distribution, humidity distribution, and gaseous or liquid state compositions of the exchange fluid.

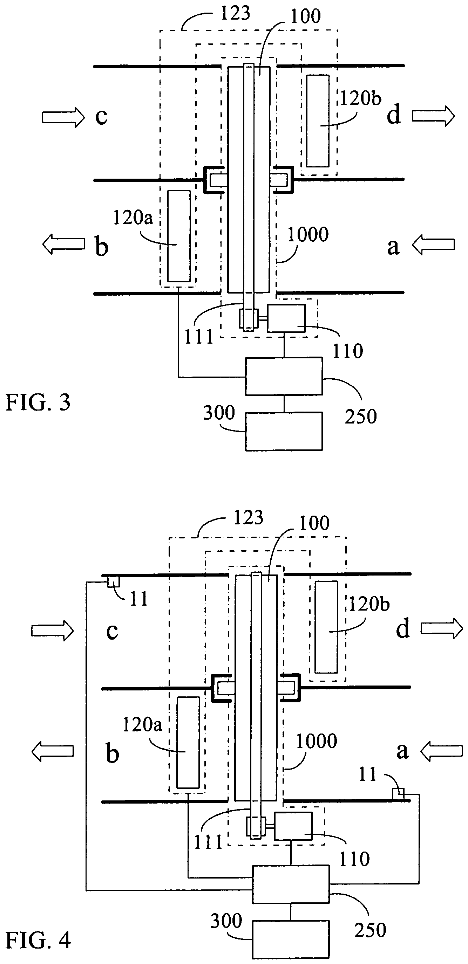

Fig. 3 is a block schematic view of an example, not being part of the invention, showing the present invention is capable of automatically operatively controlling the flow rate of heat exchange fluid; As shown in Fig. 3, the present example is mainly constituted by that the fluid port (b) and the fluid port (d) among the fluid port (a), fluid port (b), fluid port (c), and fluid port (d) of the double flow circuit of the rotary type heat exchange apparatus (1000) are respectively installed with the unidirectional fluid pumps (120a)(120b) capable of producing negative pressure or positive pressure to constitute the double flow circuit fluid pumping device (123), and it is through the power of power source (300) and operative control of the operative control device (250) to drive the unidirectional fluid pumps (120a)(120b) of the double flow circuit fluid pumping device (123) being capable of producing negative pressure or positive pressure for pumping the two fluids to pass through the rotary type heat exchange rotating disk (100) in different areas and different flow directions, and the flow circuits of the two fluid streams are mutually isolated, wherein:
-- The rotary type heat exchange apparatus (1000) and the unidirectional fluid pumps (120a)(120b) capable of producing negative pressure or positive pressure can be integrally combined or separately installed to constitute the double flow circuit fluid pumping device (123) function, and the two unidirectional fluid pumps (120a)(120b) capable of producing negative pressure or positive pressure are respectively installed to the fluid port (b) and the fluid port (d) so as to pump the fluid in different pumping flow directions; said two unidirectional fluid pumps (120a)(120b) capable of producing negative pressure or positive pressure are respectively driven by the electric motor individually or are commonly driven by the same motor, wherein they are operatively controlled by the operative control device (250) to operate in one or more than one functional modes of the following, including: 1) the two unidirectional fluid pumps (120a)(120b) are pumped in negative pressure for pumping the two fluid streams in different pumping flow directions; 2) the two unidirectional fluid pumps (120a)(120b) are pumped in positive pressure for pumping the two fluid streams in different pumping flow directions; in said two functional mode operations of said 1) & 2), the two fluid streams are pumped to pass through different areas of the rotary type heat exchange rotating disk (100), the flow circuits of the two fluid streams are mutually isolated, and the flow directions of the two fluid streams are contrary to each other;
-- The double flow circuit fluid pumping device (123): It is constituted by at least two unidirectional fluid pumps (120a)(120b), wherein the fluid port (b) and the fluid port (d) among the fluid port (a), fluid port (b), fluid port (c), and fluid port (d) of the double flow circuit installed within the rotary type heat exchange apparatus (1000) are respectively installed with the unidirectional fluid pumps (120a)(120b) being capable of producing negative or positive pressure to constitute the double flow circuit fluid pumping device (123), thereby by the operative control device (250) to operative control the flow rate of the heat exchange fluid pumped by the double fluid circuit fluid pumping device (123) driven by the power source (300), as well as to operative control the rotating speed of the rotary type heat exchange rotating disk (100) driven by the rotating disk rotationally driving device (110);
-- The power source (300): It is the device including AC or DC city power system or independent power supply device to provide power source for the operation of the rotary type heat exchange apparatus with automatic exchange flow rate modulation;
-- The operative control device (250): It is constituted by electromechanical components, solid state electronic components, or microprocessors and related software and operative control interfaces to operatively control the unidirectional fluid pumps (120a)(120b) of the double flow circuit fluid pumping device (123) by: 1) operatively controlling the switching functional operation; or 2) operatively controlling the flow rate of pumping heat exchange fluid; or 3) operatively controlling the temperature distribution status between the fluid and rotary type heat exchange rotating disk (100); or 4) operatively controlling the rotating speed of the rotary type heat exchange rotating disk (100) driven by the rotating disk rotationally driving device (110); or 5) integrally operatively controlling at least two of said items 1)2)3)4) in combination;
-- The rotating disk rotationally driving device (110): It is constituted by electric motor or other rotational power source with variable speed transmission device (111) for driving the rotary type heat exchange rotating disk (100) to rotate and modulating its rotating speed to change its heat exchange characteristics;
-- The rotary type heat exchange rotating disk (100): It is rotationally driven by the rotating disk rotationally driving device (110), wherein its disk is internally provided with two porous fluid circuit areas for passing through different directional fluid flows and has the heat absorbing or dissipating function, the two fluid circuits of the rotary type heat exchange rotating disk are respectively provided with two fluid ports for respectively pumping two fluid streams, wherein the passage of the two fluid streams are mutually isolated, thereby allowing the fluids in different flowing directions to pass through the rotary type heat exchange rotating disk (100) rotationally driven by the rotating disk rotationally driving device (110) for heat exchange function operations; -- The timings to operatively control the flow rate of heat exchange fluid and/or the rotating speed of rotary type heat exchange rotating disk (100) driven by rotating disk rotationally driving device (110) are that: 1) the fluid flow rate and change timing are preset in the open loop operative control; or 2) it is randomly manually operatively controlled;

The unidirectional fluid pump (120a) and unidirectional fluid pump (120b) can also be installed to the fluid ports (a)(d) or installed to the fluid ports (b)(c) in said embodiment of Fig. 3, wherein one unidirectional fluid pump is pumped in positive pressure while the other unidirectional fluid pump is pumped in negative pressure so as to allow the two fluid streams to pass through the rotary type heat exchange rotating disk (100) in different pumping flow directions.

Fig. 4 is a block schematic view of an example, not being part of the invention, showing that the present invention is further installed with the temperature detecting device to operatively control the flow rates of the heat exchange fluids; As shown in Fig. 4, the present example is mainly constituted by that the fluid port (b) and fluid port (d) among the fluid port (a), fluid port (b), fluid port (c), and fluid port (d) of the double flow circuit of the rotary type heat exchange apparatus (1000) are respectively installed with the unidirectional fluid pumps (120a)(120b) capable of producing negative pressure or positive pressure to constitute the double flow circuit fluid pumping device (123), and it is through the power of power source (300) and operative control of the operative control device (250) to drive the unidirectional fluid pumps (120a)(120b) of the double flow circuit fluid pumping device (123) being capable of producing negative pressure or positive pressure for pumping the two fluids to pass through the rotary type heat exchange rotating disk (100) in different areas and different flow directions, and the flow circuits of the two fluid streams are mutually isolated, wherein:
-- The rotary type heat exchange apparatus (1000) and the unidirectional fluid pumps (120a)(120b) capable of producing negative pressure or positive pressure can be integrally combined or separately installed to constitute the double flow circuit fluid pumping device (123) function, and the two unidirectional fluid pumps (120a)(120b) capable of producing negative pressure or positive pressure are respectively installed to the fluid port (b) and the fluid port (d) so as to pump the fluid in different pumping flow directions; said two unidirectional fluid pumps (120a)(120b) capable of producing negative pressure or positive pressure are respectively driven by the electric motor individually or are commonly driven by the same motor, wherein they are operatively controlled by the operative control device (250) to operate in one or more than one functional modes of the following, including: 1) the two unidirectional fluid pumps (120a)(120b) are pumped in negative pressure for pumping the two fluid streams in different pumping flow directions; 2) the two unidirectional fluid pumps (120a)(120b) are pumped in positive pressure for pumping the two fluid streams in different pumping flow directions; in said two functional mode operations of said 1) & 2), the two fluid streams are pumped to pass through different areas of the rotary type heat exchange rotating disk (100), the flow circuits of the two fluid streams are mutually isolated, and the flow directions of the two fluid streams are contrary to each other;
-- At least one temperature detecting device (11) is installed at the position capable of directly or indirectly detecting the temperature variation of the pumping exchange fluid, wherein the detected signal is referred as the operative control timing for the operative control device (250); including: 1) operatively controlling the flow rate of the exchange fluid pumped by the double flow circuit fluid pumping device (123); or 2) operatively controlling the rotating speed of the rotary type heat exchange rotating disk (100) driven by the rotating disk rotationally driving device (110); or 3) operatively controlling said items 1) & 2) simultaneously;
-- The double flow circuit fluid pumping device (123) : It is constituted by at least two unidirectional fluid pumps (120a)(120b), wherein the fluid port (b) and fluid port (d) among the fluid port (a), fluid port (b), fluid port (c), and fluid port (d) of the double flow circuit installed within the rotary type heat exchange apparatus (1000) are respectively installed with the unidirectional fluid pumps (120a)(120b) being capable of producing negative or positive pressure to constitute the double flow circuit fluid pumping device (123), thereby by the operative control device (250) to operative control the flow rate of the heat exchange fluid pumped by the double fluid circuit fluid pumping device (123) driven by the power source (300), as well as to operative control the rotating speed of the rotary type heat exchange rotating disk (100) driven by the rotating disk rotationally driving device (110);
-- The power source (300): It is the device including AC or DC city power system or independent power supply device to provide power source for the operation of the rotary type heat exchange apparatus with automatic exchange flow rate modulation;
-- The operative control device (250): It is constituted by electromechanical components, solid state electronic components, or microprocessors and related software and operative control interfaces to operatively control the unidirectional fluid pumps (120a)(120b) of the double flow circuit fluid pumping device (123) by: 1) operatively controlling the switching functional operation; or 2) operatively controlling the flow rate of pumping heat exchange fluid; or 3) operatively controlling the temperature distribution status between the fluid and the rotary type heat exchange rotating disk (100); or 4) operatively controlling the rotating speed of the rotary type heat exchange rotating disk (100) driven by the rotating disk rotationally driving device (110); or 5) integrally operatively controlling at least two of said items 1)2)3)4) in combination;
-- The rotating disk rotationally driving device (110): It is constituted by electric motor or other rotational power source with variable speed transmission device (111) for driving the rotary type heat exchange rotating disk (100) to rotate and modulating its rotating speed to change its heat exchange characteristics;
-- The rotary type heat exchange rotating disk (100): It is rotationally driven by the rotating disk rotationally driving device (110), wherein its disk is internally provided with two porous fluid circuit areas for passing through different directional fluid flows and has the heat absorbing or dissipating function, the two fluid circuits of the rotary type heat exchange rotating disk are respectively provided with two fluid ports for respectively pumping two fluid streams, wherein the two fluid flow circuits are mutually isolated, thereby allowing the fluids in different flowing directions to pass through the rotary type heat exchange rotating disk (100) rotationally driven by the rotating disk rotationally driving device (110) for heat exchange function operations;
-- The timings to operatively control the flow rate of heat exchange fluid and/or the rotating speed of rotary type heat exchange rotating disk (100) driven by rotating disk rotationally driving device (110) are that: 1) the fluid flow rate and change timing are preset in the open loop operative control; or 2) it is randomly manually operatively controlled; or 3) to install at least one temperature detecting device (11) at the position capable of directly or indirectly detecting the temperature variation, wherein the signals detected by the temperature detecting device (11) is referred to determine the operating timing for operatively controlling the flow rate of pumping exchange fluid and/or the rotating speed of the rotary type heat exchange rotating disk (100) driven by the rotating disk rotationally driving device (110);

The unidirectional fluid pump (120a) and unidirectional fluid pump (120b) can also be installed to the fluid ports (a)(d) or installed to the fluid ports (b)(c) in said embodiment of Fig. 4, wherein one unidirectional fluid pump is pumped in positive pressure while the other unidirectional fluid pump is pumped in negative pressure so as to allow the two fluid streams to pass through the rotary type heat exchange rotating disk (100) in different pumping flow directions.

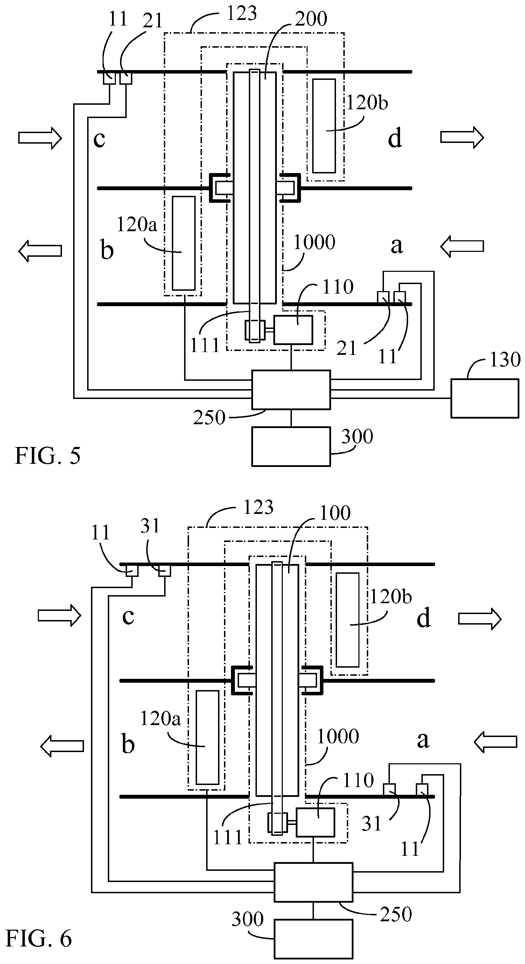

Fig. 5 is a block schematic view of an example, not being part of the invention, showing that the present invention is further installed with the temperature detecting device and humidity detecting device to operatively control the flow rates of the total heat exchange fluid; As shown in Fig. 5, the present example is mainly constituted by that the fluid port (b) and fluid port (d) among the fluid port (a), fluid port (b), fluid port (c), and fluid port (d) of the double flow circuit of the rotary type heat exchange apparatus (1000) are respectively installed with the unidirectional fluid pumps (120a)(120b) capable of producing negative pressure or positive pressure to constitute the double flow circuit fluid pumping device (123), thereby by the operative control device (250) to operative control the unidirectional fluid pumps (120a)(120b) capable of producing negative pressure or positive pressure of the double flow circuit fluid pumping device (123) being driven by the power source (300), wherein the pumping two fluid streams pass through the rotary type total heat exchange rotating disk (200) in different areas, and the flow directions of the two fluid streams are different and mutually isolated, wherein:
-- The rotary type heat exchange apparatus (1000) and the unidirectional fluid pumps (120a)(120b) capable of producing negative pressure or positive pressure can be integrally combined or separately installed to constitute the double flow circuit fluid pumping device (123) function, and the two unidirectional fluid pumps (120a)(120b) capable of producing negative pressure or positive pressure are respectively installed to the fluid port (b) and the fluid port (d) so as to pump the fluid in different pumping flow directions; said two unidirectional fluid pumps (120a)(120b) capable of producing negative pressure or positive pressure are respectively driven by the electric motor individually or are commonly driven by the same motor, wherein they are operatively controlled by the operative control device (250) to operate in one or more than one functional modes of the following, including: 1) the two unidirectional fluid pumps (120a)(120b) are pumped in negative pressure for pumping the two fluid streams in different pumping flow directions; 2) the two unidirectional fluid pumps (120a)(120b) are pumped in positive pressure for pumping the two fluid streams in different pumping flow directions; in said two functional mode operations of said 1) & 2), the two fluid streams are pumped to pass through different areas of the rotary type total heat exchange rotating disk (200), the flow circuits of the two fluid streams are mutually isolated, and the flow directions of the two fluid streams are contrary to each other;
-- At least one temperature detecting device (11) and at least one humidity detecting device (21) are installed at the positions capable of directly or indirectly detecting the temperature and humidity variations of the pumping exchange fluid, including installing both or at least one detecting device, wherein the detected signals are referred as the operating timing for the operative control device (250); including: 1) operatively controlling the flow rate of the exchange fluid pumped by the double flow circuit fluid pumping device (123); or 2) operatively controlling the rotating speed of the rotary type total heat exchange rotating disk (200) driven by rotating disk rotationally driving device (110); or 3) operatively controlling said items 1) & 2) simultaneously;
   Said temperature detecting device (11) and humidity detecting device (21) are integrally combined or individually separately installed;
-- The double flow circuit fluid pumping device (123): It is constituted by at least two unidirectional fluid pumps (120a)(120b), wherein the fluid port (b) and fluid port (d) of the double flow circuit installed within the rotary type heat exchange apparatus (1000) are respectively installed with the unidirectional fluid pumps (120a)(120b) being capable of producing negative or positive pressure to constitute the double flow circuit fluid pumping device (123), thereby by the operative control device (250) to operative control the flow rate of the heat exchange fluid pumped by the double fluid circuit fluid pumping device (123) driven by the power source (300), as well as to operative control the rotating speed of the rotary type total heat exchange rotating disk (200) driven by the rotating disk rotationally driving device (110);
-- The power source (300): It is the device including AC or DC city power system or independent power supply device to provide power source for the operation of the rotary type heat exchange apparatus with automatic exchange flow rate modulation;
-- The operative control device (250): It is constituted by electromechanical components, solid state electronic components, or microprocessors and related software and operative control interfaces to operatively control the unidirectional fluid pumps (120a)(120b) of the double flow circuit fluid pumping device (123) by: 1) operatively controlling the switching functional operation; or 2) operatively controlling the flow rate of pumping heat exchange fluid; or 3) operatively controlling the temperature distribution status between the fluid and the rotary type total heat exchange rotating disk (200); or 4) operatively controlling the humidity distribution status of the rotary type total heat exchange rotating disk (200); or 5) operatively controlling the rotating speed of the rotary type total heat exchange rotating disk (200) driven by the rotating disk rotationally driving device (110); or 6) integrally operatively controlling at least two of said items 1), 2), 3), 4) & 5) in combination;
-- The rotating disk rotationally driving device (110): It is constituted by electric motor or other rotational power source with variable speed transmission device (111) for driving the rotary type total heat exchange rotating disk (200) to rotate and modulating its rotating speed to change its heat exchange characteristics;
-- The rotary type total heat exchange rotating disk (200): It is rotationally driven by the rotating disk rotationally driving device (110), wherein its disk is internally provided with two porous fluid circuit areas for passing through different directional fluid flows and has the heat absorbing or dissipating as well as humidity absorbing or dissipating function, the two fluid circuits of the rotary type total heat exchange rotating disk (200) are respectively individually made with two fluid ports for respectively pumping two fluid streams, wherein the two fluid flow circuits are mutually isolated, thereby allowing the fluids in different flow directions to pass through the rotary type total heat exchange rotating disk (200) driven by the rotating disk rotationally driving device (110) for total heat exchange function operations; -- The timings to operatively control the flow rate of heat exchange fluid and/or the rotating speed of rotary type total heat exchange rotating disk (200) driven by rotating disk rotationally driving device (110) are that: 1) the fluid flow rate and change timing are preset in the open loop operative control; or 2) it is randomly manually operatively controlled; or 3) to install both or at least one of the temperature detecting device (11), and humidity detecting device (21) at the position capable of directly or indirectly detecting the temperature variation, or humidity variation of the pumping exchange fluid, wherein the detected signals are referred to determine the operating timing for operatively controlling the flow rate of pumping exchange fluid and/or the rotating speed of the rotary type total heat exchange rotating disk (200) driven by the rotating disk rotationally driving device (110);

The unidirectional fluid pump (120a) and unidirectional fluid pump (120b) can also be installed to the fluid ports (a)(d) or installed to the fluid ports (b)(c) in said embodiment of Fig. 5, wherein one unidirectional fluid pump is pumped in positive pressure while the other unidirectional fluid pump is pumped in negative pressure so as to allow the two fluid streams to pass through the rotary type total heat exchange rotating disk (200) in different pumping flow directions;

The aforesaid embodiment of Fig. 5 is further installed a heater (130) in the fluid exchange flow circuit of the rotary type total heat exchange rotating disk (200) to enhance the dehumidification performance, wherein the heater is actuated by electric energy or other temperature controllable heat generating sources;

In addition, it is further through the operative control device (250) to refer to detected values of the temperature detecting device (11), humidity detecting device (21) to operatively control the heating timing and heating thermal energy value of the heater (130); Fig. 6 is a schematic view of the structural principle of an embodiment of the invention including a temperature detecting device and a gaseous or liquid state composition detecting device to operatively control the flow rates of the heat exchange fluids; As shown in Fig. 6, the present embodiment is mainly constituted by that the fluid port (b) and fluid port (d) among the fluid port (a), fluid port (b), fluid port (c), and fluid port (d) of the double flow circuit of the rotary type heat exchange apparatus (1000) are respectively installed with the unidirectional fluid pumps (120a)(120b) capable of producing negative pressure or positive pressure to constitute the double flow circuit fluid pumping device (123), and it is through the power of power source (300) and operative control of the operative control device (250) to drive the unidirectional fluid pumps (120a)(120b) of the double flow circuit fluid pumping device (123) being capable of producing negative pressure or positive pressure for pumping the two fluids to pass through the rotary type heat exchange rotating disk (100) in different flow directions, and the flow circuits of the two fluid streams in different flow directions are mutually isolated, wherein:
-- The rotary type heat exchange apparatus (1000) and the unidirectional fluid pumps (120a)(120b) capable of producing negative pressure or positive pressure can be integrally combined or separately installed to constitute the double flow circuit fluid pumping device (123) function, and the two unidirectional fluid pumps (120a)(120b) capable of producing negative pressure or positive pressure are respectively installed to the fluid port (b) and the fluid port (d) so as to pump the fluid in different pumping flow directions; said two unidirectional fluid pumps (120a)(120b) capable of producing negative pressure or positive pressure are respectively driven by the electric motor individually or are commonly driven by the same motor, wherein they are operatively controlled by the operative control device (250) to operate in one or more than one functional modes of the following, including: 1) the two unidirectional fluid pumps (120a)(120b) are pumped in negative pressure for pumping the two fluid streams in different pumping flow directions; 2) the two unidirectional fluid pumps (120a)(120b) are pumped in positive pressure for pumping the two fluid streams in different pumping flow directions; in said two functional mode operations of said 1) & 2), the two fluid streams are pumped to pass through different areas of the rotary type heat exchange rotating disk (100), the flow circuits of the two fluid streams are mutually isolated, and the flow directions of the two fluid streams are contrary to each other;
-- At least one temperature detecting device (11) and at least one gaseous or liquid state fluid composition detecting device (31) are installed at the positions capable of directly or indirectly detecting the temperature variation of the pumping exchange fluid and the composition variation of the pumping gaseous or liquid state fluid, including installing both or at least one detecting device, wherein the detected signals are referred as the operating timing for the operative control device (250); including 1) operatively controlling the flow rate of the exchange fluid pumped by the double flow circuit fluid pumping device (123); or 2) operatively controlling the rotating speed of the rotating speed of the rotary type heat exchange rotating disk (100) driven by the rotating disk rotationally driving device (110); or 3) operatively controlling said items 1) & 2) simultaneously;
   Said temperature detecting device (11) and gaseous or liquid state fluid composition detecting device (31) are integrally combined or individually separately installed;
-- The double flow circuit fluid pumping device (123): It is constituted by at least two unidirectional fluid pumps (120a)(120b), wherein the fluid port (b) and fluid port (d) among the fluid port (a), fluid port (b), fluid port (c), and fluid port (d) of the double flow circuit installed within the rotary type heat exchange apparatus (1000) are respectively installed with the unidirectional fluid pumps (120a)(120b) being capable of producing negative or positive pressure to constitute the double flow circuit fluid pumping device (123), thereby by the operative control device (250) to operative control the flow rate of the heat exchange fluid pumped by the double fluid circuit fluid pumping device (123) driven by the power source (300), as well as to operative control the rotating speed of the rotary type heat exchange rotating disk (100) driven by the rotating disk rotationally driving device (110);
-- The power source (300): It is the device including AC or DC city power system or independent power supply device to provide power source for the operation of the rotary type heat exchange apparatus with automatic exchange flow rate modulation;
-- The operative control device (250): It is constituted by electromechanical components, solid state electronic components, or microprocessors and related software and operative control interfaces to operatively control the unidirectional fluid pumps (120a)(120b) of the double flow circuit fluid pumping device (123) by: 1) operatively controlling the switching functional operation; or 2) operatively controlling the flow rate of pumping heat exchange fluid; or 3) operatively controlling the temperature distribution status between the fluid and the rotary type heat exchange rotating disk (100); or 4) operatively controlling the composition interaction status of between the gaseous or liquid state fluids for heat exchange at the two sides of the rotary type heat exchange apparatus (1000);or 5) operatively controlling the rotating speed of the rotary type heat exchange rotating disk (100) driven by the rotating disk rotationally driving device (110); or 6) integrally operatively controlling at least two of said items 1), 2), 3), 4) & 5)in combination;
-- The rotating disk rotationally driving device (110): It is constituted by electric motor or other rotational power source with variable speed transmission device (111) for driving the rotary type heat exchange rotating disk (100) to rotate and modulating its rotating speed to change its heat exchange characteristics;
-- The rotary type heat exchange rotating disk (100): It is rotationally driven by the rotating disk rotationally driving device (110), wherein its disk is internally provided with two porous fluid circuit areas for passing through different directional fluid flows and has the heat absorbing or dissipating function, the two fluid circuits of the rotary type heat exchange rotating disk are respectively individually made with two fluid ports for respectively pumping two fluid streams, wherein the two fluid flow circuits are mutually isolated, thereby allowing the fluids in different flow directions to pass through the rotary type heat exchange rotating disk (100) driven by the rotating disk rotationally driving device (110) for heat exchange function operations;
-- The timings to operatively control the flow rate of heat exchange fluid and/or the rotating speed of rotary type heat exchange rotating disk (100) driven by rotating disk rotationally driving device (110) are that: 1) the fluid flow rate and change timing are preset in the open loop operative control; or 2) It is randomly manually operatively controlled; or 3) to install at least one temperature detecting device (11) or at least one gaseous or liquid state fluid composition detecting device (31) at the position capable of directly or indirectly detecting the temperature or composition of the pumping gaseous or liquid state fluid, including installing both or at least one detecting device, wherein the detected signals are used as the reference to determine the operating timing for operatively controlling the flow rate of the pumping exchange fluid or the rotating speed of the rotary type heat exchange rotating disk (100) driven by the rotating disk rotationally driving device (110);

The unidirectional fluid pump (120a) and unidirectional fluid pump (120b) can also be installed to the fluid ports (a)(d) or installed to the fluid ports (b)(c) in said embodiment of Fig. 6, wherein one unidirectional fluid pump is pumped in positive pressure while the other unidirectional fluid pump is pumped in negative pressure so as to allow the two fluid streams to pass through the rotary type heat exchange rotating disk (100) in different pumping flow directions.

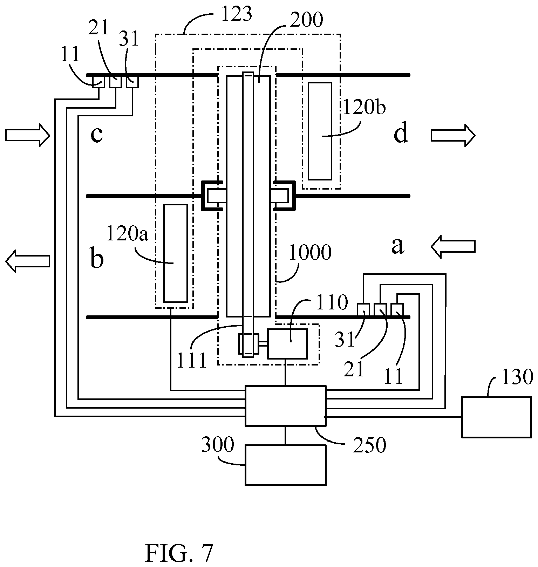

Fig. 7 is a schematic view of the structural principle of an embodiment of the invention showing that the present invention is further installed with the temperature detecting device, a humidity detecting device and a gaseous or liquid state composition detecting device to operatively control the flow rates of the total heat exchange fluids; As shown in Fig. 7, the present embodiment is mainly constituted by that the fluid port (b) and fluid port (d) among the fluid port (a), fluid port (b), fluid port (c), and fluid port (d) of the double flow circuit of the rotary type heat exchange apparatus (1000) are respectively installed with the unidirectional fluid pumps (120a)(120b) capable of producing negative pressure or positive pressure to constitute the double flow circuit fluid pumping device (123), thereby by the operative control device (250) to operative control the unidirectional fluid pumps (120a)(120b) capable of producing negative pressure or positive pressure of the double flow circuit fluid pumping device (123) being driven by the power source (300), wherein the pumping two fluid streams pass through the rotary type total heat exchange rotating disk (200) in different areas, and the flow directions of the two fluid streams are different and mutually isolated, wherein:
-- The rotary type heat exchange apparatus (1000) and the unidirectional fluid pumps (120a)(120b) capable of producing negative pressure or positive pressure can be integrally combined or separately installed to constitute the double flow circuit fluid pumping device (123) function, and the two unidirectional fluid pumps (120a)(120b) capable of producing negative pressure or positive pressure are respectively installed to the fluid port (b) and the fluid port (d) so as to pump the fluid in different pumping flow directions; said two unidirectional fluid pumps (120a)(120b) capable of producing negative pressure or positive pressure are respectively driven by the electric motor individually or are commonly driven by the same motor, wherein they are operatively controlled by the operative control device (250) to operate in one or more than one functional modes of the following, including: 1) the two unidirectional fluid pumps (120a)(120b) are pumped in negative pressure for pumping the two fluid streams in different pumping flow directions; 2) the two unidirectional fluid pumps (120a)(120b) are pumped in positive pressure for pumping the two fluid streams in different pumping flow directions; in said two functional mode operations of said 1) & 2), the two fluid streams are pumped to pass through different areas of the rotary type total heat exchange rotating disk (200), the flow circuits of the two fluid streams are mutually isolated, and the flow directions of the two fluid streams are contrary to each other;
-- At least one temperature detecting device (11), at least one humidity detecting device (21), or at least one gaseous or liquid state fluid composition detecting device (31) are installed at the positions capable of directly or indirectly detecting the temperature variation, humidity variation, or gaseous or liquid state fluid composition variation of the pumping exchange fluid, including installing three or at least one detecting device, wherein the detected signals are used as the references to determine the operating timing of the exchange fluid flow rate pumped by the double flow circuit fluid pumping device (123) being operatively controlled by the operative control device (250); including 1) operatively controlling the flow rate of the exchange fluid pumped by the double flow circuit fluid pumping device (123); or 2) operatively controlling the rotating speed of the rotary type total heat exchange rotating disk (200) driven by the rotating disk rotationally driving device (110); or 3) operatively controlling said items 1) & 2) simultaneously;
   Said temperature detecting device (11), humidity detecting device (21) and gaseous or liquid state fluid composition detecting device (31) are integrally combined or individually separately installed;
-- The double flow circuit fluid pumping device (123): It is constituted by at least two unidirectional fluid pumps (120a)(120b), wherein the fluid port (b) and fluid port (d) of the double flow circuit installed within the rotary type heat exchange apparatus (1000) are respectively installed with the unidirectional fluid pumps (120a)(120b) being capable of producing negative or positive pressure to constitute the double flow circuit fluid pumping device (123), thereby by the operative control device (250) to operative control the flow rate of the heat exchange fluid pumped by the double fluid circuit fluid pumping device (123) driven by the power source (300), as well as to operative control the rotating speed of the rotary type total heat exchange rotating disk (200) driven by the rotating disk rotationally driving device (110);
-- The power source (300): It is the device including AC or DC city power system or independent power supply device to provide power source for the operation of the rotary type heat exchange apparatus with automatic exchange flow rate modulation;
-- The operative control device (250): It is constituted by electromechanical components, solid state electronic components, or microprocessors and related software and operative control interfaces to operatively control the unidirectional fluid pumps (120a)(120b) of the double flow circuit fluid pumping device (123) by: 1) operatively controlling the switching functional operation; or 2) operatively controlling the flow rate of pumping heat exchange fluid; or 3) operatively controlling the temperature distribution status between the fluid and the rotary type total heat exchange rotating disk (200); or 4) operatively controlling the humidity distribution status of the rotary type total heat exchange rotating disk (200); or 5) operatively controlling the composition interaction status between the gaseous or liquid state fluids for heat exchange at the two sides of the rotary type heat exchange apparatus (1000); or 6) operatively controlling the rotating speed of the rotary type total heat exchange rotating disk (200) driven by the rotating disk rotationally driving device (110); or 7) integrally operatively controlling at least two of said items 1), 2), 3), 4), 5) & 6) in combination;
-- The rotating disk rotationally driving device (110): It is constituted by electric motor or other rotational power source with variable speed transmission device (111) for driving the rotary type total heat exchange rotating disk (200) to rotate and modulating its rotating speed to change its heat exchange characteristics;
-- The rotary type total heat exchange rotating disk (200): It is rotationally driven by the rotating disk rotationally driving device (110), wherein its disk is internally provided with two porous fluid circuit areas for passing through different directional fluid flows and has the heat absorbing or dissipating as well as humidity absorbing or dissipating function, the two fluid circuits of the rotary type total heat exchange rotating disk (200) are respectively individually made with two fluid ports for respectively pumping two fluid streams, wherein the two fluid flow circuits are mutually isolated, thereby allowing the fluids in different flow directions to pass through the rotary type total heat exchange rotating disk (200) driven by the rotating disk rotationally driving device (110) for total heat exchange function operations;
-- The timings to operatively control the flow rate of heat exchange fluid and/or the rotating speed of rotary type total heat exchange rotating disk (200) driven by rotating disk rotationally driving device (110) are that: 1) the fluid flow rate and change timing are preset in the open loop operative control; or 2) it is randomly manually operatively controlled; or 3) to install three or at least one kind of detecting devices of at least one temperature detecting device (11), at least one humidity detecting device (21), or at least one gaseous or liquid state fluid composition detecting device (31) at the position capable of directly or indirectly detecting the temperature variation, humidity variation, or gaseous or liquid state fluid composition variation of the pumping exchange fluid, wherein the detected signals are used as the reference to determine the operating timing for operatively controlling the flow rate of the pumping fluid or the rotating speed of the rotary type total heat exchange rotating disk (200) driven by the rotating disk rotationally driving device (110);

The unidirectional fluid pump (120a) and unidirectional fluid pump (120b) can also be installed to the fluid ports (a)(d) or installed to the fluid ports (b)(c) in said embodiment of Fig. 7, wherein one unidirectional fluid pump is pumped in positive pressure while the other unidirectional fluid pump is pumped in negative pressure so as to allow the two fluid streams to pass through the rotary type total heat exchange rotating disk (200) in different pumping flow directions; In the aforesaid embodiment of Fig. 7 is further installed a heater (130) in the fluid exchange flow circuit of the rotary type heat exchange rotating disk (200) to enhance the dehumidification performance, wherein the heater is actuated by electric energy or other temperature controllable heat generating sources;
In addition, it is further through the operative control device (250) to refer to detected values of the temperature detecting device (11), humidity detecting device (21), gaseous or liquid state composition detecting device (31) to operatively control the heating timing and heating thermal energy value of the heater (130);
For the rotary type heat exchange apparatus with automatic flow rate exchange modulation of present invention, the structural types of the rotary type heat exchange rotating disk or the rotary type total heat exchange rotating disk include one or more than one characteristic of the following: 1) the tubular structure in linear or other geometric shape; or 2) the multi-layer structure constituted by the gaseous or liquid state liquid fluid circuits; or 3) one or more than one fluid circuit in series connection, parallel connection, or series and parallel connection;
The rotary type heat exchange apparatus with automatic flow rate exchange modulation of present invention is further installed with the three or at least one or more than one detecting devices of the temperature detecting device (11), humidity detecting device (21), and gaseous or liquid state fluid composition detecting device (31), wherein the installation positions include both or one of the positions near to fluid port (a) and fluid port (b), or both or one of the positions near to fluid port (c) and fluid port (d) of the rotary type heat exchange apparatus (1000), rotary type heat exchange rotating disk (100), or rotary type total heat exchange rotating disk (200), or the other positions capable of detecting the temperature, humidity or composition of the exchange fluid during heat exchange operation, and the number of them could be one or more than one to provide detected signals for reference by one or more than functional operations of the following: 1) for reference to operatively control the double flow circuit fluid pumping device (123) for modulating the flow speed or flow rate of the pumping fluid; or 2) for reference to operatively control the opening percentage of the fluid valve for modulating the flow speed or flow rate of the pumping fluid;
For said temperature detecting device (11), humidity detecting device (21), and gaseous or liquid state fluid composition detecting device (31), all of the detecting devices are integrally combined, or part of the detecting devices are integrally combined, or they are individually separately installed;
Said double flow circuit fluid pumping device (123) of the present invention constituted by two unidirectional fluid pumps (120a)(120b) is configured for pumping gaseous or liquid state fluids, wherein the two unidirectional fluid pumps (120a)(120b) constituting the double flow circuit fluid pumping device (123) except for being driven by individually installed electric motors or by a common electric motor, they can also be driven by engine power, or the mechanical or electric power converted from other wind power, thermal energy, temperature-difference energy, or solar energy.

The operative control device (250) of the present embodiment is equipped with the electric motor, engine power, or mechanical or electric power generated or converted from other wind power, thermal energy, temperature-difference energy, or solar energy for driving various unidirectional fluid pumps (120a)(120b), or the rotating disk rotationally driving device (110), or capable of operatively controlling the operating timing of the fluid pumps or fluid valves thereby changing the flow directions of the two fluid streams passing through the rotary type heat exchange rotating disk (100), or capable of operatively controlling the rotating speed of the rotary type heat exchange rotating disk (100) or the rotary type total heat exchange rotating disk (200) driven by the rotating disk rotationally driving device (110) to further operatively control partial or all modulating functions of the rotating speed, flow rate, fluid pressure of the fluid pumps.

For said rotary type heat exchange apparatus with automatic flow rate exchange modulation of present invention, it is further through the operative control device (250) to operatively control the flow rate of the pumping fluid pumped by the double flow circuit fluid pumping device (123) and/or to operatively control the rotating speed of the rotary type heat exchange rotating disk (100) or the rotary type total heat exchange rotating disk (200) driven by the rotating disk rotationally driving device (110), wherein the operating modes include one or more than one of the following:
1) The adjustment or setting is manually operatively controlled;
2) The operative control is referring to the signal detected by at least one installed temperature detecting device;
3) The operative control is referring to the signal detected by at least one installed humidity detecting device;
4) The operative control is referring to the signal detected by at least one installed gaseous or liquid state fluid composition detecting device;
5) The operative control is performed by combining the two or more than two methods of items 1) ∼ 4).

In setting up the flow rate operative control function of the rotary type heat exchange apparatus with automatic flow rate exchange modulation of present invention, the fluid flow rate operative control range including the stepped or stepless fluid flow rate modulations from cease of transportation to maximum transportation rate is relied on one or more than one of the following devices to change the fluid flow rate, wherein it includes:
1) It is through operatively controlling the pumping rotating speed of the double flow circuit fluid pumping device (123) comprising two unidirectional fluid pumps (120a)(120b) within the range from cease of transportation to maximum transportation rate to further operatively control the fluid flow rate;
2) It is through adopting the double flow circuit fluid pumping device (123) being installed with operatively controllable fluid inlet/outlet valves to operatively control the opening of the fluid inlet/outlet valves of the double flow circuit fluid pumping device (123) to further operatively control the fluid flow rate;
3) It is through operatively controlling any one device of items 1)∼2) to pump the fluid intermittently so as to modulate the average flow rate by the time ratio of pumping on/off.

The flow rate ratio between the two fluid streams of the said rotary type heat exchange apparatus with automatic flow rate exchange modulation of present invention for passing through the rotary type heat exchange apparatus (1000) during operation include one or more than one ratio mode of the following:
1) The flow rate of fluid in one flow circuit is greater than the one in the other flow circuit;
2) The flow rates of the fluids in both flow circuits are the same;
3) Two fluid pumps in different pumping flow directions are alternatively operated to alternatively pump the two fluid streams in opposite flow directions;

For said rotary type heat exchange apparatus with automatic flow rate exchange modulation of present invention, beside of the operating function of pumping fluids of the double flow circuit in different flow directions, the double flow circuit fluid pumping device (123) being constituted by two fluid pumps capable of bidirectional pumping is through operatively controlling the pumping flow directions of the two fluid streams to further have one or more than one special operating modes of the following:
1) Operatively controlling the fluids in two flow circuits to be pumped in the same flow directions for pumping in fluids;
2) Operatively controlling the fluids in two flow circuits to be reversely pumped in the same flow directions for discharging fluids;
3) Operatively controlling the fluids in two flow circuits to be periodically pumped in positive and reverse flow directions for pumping in fluids in the same flow directions and discharging fluids in reverse flow directions.

The same directional pumping function of said two fluid streams can be applied to meet the needs for emergency additional fluid flow rate pumping in or out.

## Claims

1. A rotary type heat exchange apparatus comprising:
a heat exchange rotary disk (200, 100), arranged to be driven by a rotating disk driving device (110), and comprising two thermally conductive porous areas arranged to enable a coolant fluid to pass through the heat exchange rotary disk (200, 100) and exchange heat with the heat exchange rotary disk (200, 100);
a reversible flow circuit fluid pumping device (123), comprising at least two fluid pumps (120a, 120b) arranged to pump the coolant fluid through the heat exchange rotary disk (200, 100);
a first fluid flow path, comprising first fluid ports (a, b) arranged to enable the coolant fluid to flow through the heat exchange rotary disk (200, 100) in a first direction;
a second fluid flow path, comprising second fluid ports (c, d) arranged to enable the coolant fluid to flow through the heat exchange rotary disk (200, 100) in a second direction, opposite to the first direction;
a control device (250) arranged to receive a detection signal from a detector and to automatically control the speed of rotation of the heat exchange rotary disk depending on the conditions detected by the detector; **characterized in that** the detector disposed within the heat exchanger is arranged to detect the condition of the passing coolant fluid to the heat exchanger, the detector comprising a gaseous or liquid state fluid composition detecting device (31), and a detector selected from i) a temperature detector; and/or ii) a humidity detector (21).

2. A rotary type heat exchange apparatus according to claim 1, wherein the fluid pumps (120a)(120b) are respectively installed among the first fluid ports (a, b), and the second fluid ports (c, d), and are capable of producing negative pressure or positive pressure to constitute a reversible flow circuit fluid pumping device (123); said fluid pumps (120a)(120b) being respectively driven by an electric motor individually or commonly driven by a same motor, the apparatus further comprising:
a power source (300) to provide power for the operation of the rotary type heat exchange apparatus with automatic exchange flow rate modulation.

3. A rotary type heat exchange apparatus as defined in claim 1 or 2, wherein the temperature detecting device (11) is installed at a position capable of directly or indirectly detecting the temperature variation of the pumping exchange fluid, wherein the detected signal is referred as the operative control timing for the operative control device (250); including: 1) operatively controlling the flow rate of the exchange fluid pumped by the reversible flow circuit fluid pumping device (123); and/or 2) operatively controlling the rotating speed of the rotary type heat exchange rotating disk (100) driven by the rotating disk rotationally driving device (110).

4. A rotary type heat exchange apparatus as claimed in any one of the preceding claims, wherein the structural types of the rotary type heat exchange rotating disk or the rotary type total heat exchange rotating disk include one or more than one characteristic of the following: 1) a tubular structure in a linear or other geometric shape; or 2) a multi-layer structure constituted by the gaseous or liquid state liquid fluid circuits; or 3) one or more than one fluid circuit in series connection, parallel connection, or series and parallel connection.

5. A rotary type heat exchange apparatus with automatic flow rate exchange modulation as claimed in any one of the preceding claims, wherein in setting up the flow rate operative control function, the fluid flow rate operative control range is including the stepped or stepless fluid flow rate modulations from cease of transportation to maximum transportation rate is relied on one or more than one of the following devices to change the fluid flow rate, wherein it includes:
operatively controlling the pumping speed of the reversible flow circuit fluid pumping device (123) within the range from cease of transportation to maximum transportation rate to further operatively control the fluid flow rate; and /or
installing the double flow circuit fluid pumping device (123) with operatively controllable fluid inlet/outlet valves to operatively control the opening of the fluid inlet/outlet valves of the double flow circuit fluid pumping device (123) to further operatively control the fluid flow rate.

6. A rotary type heat exchange apparatus with automatic flow rate exchange modulation as claimed in any one of the preceding claims, wherein a flow rate ratio between the two fluid streams for passing through the rotary type heat exchange apparatus (1000) during operation include one or more than one ratio mode of the following:
the flow rate of fluid in one flow circuit is greater than the one in the other flow circuit;
the flow rates of the fluids in both flow circuits are the same; two fluid pumps in different pumping flow directions are alternatively operated to alternatively pump the two fluid streams in opposite flow directions.

## Patentansprüche

1. Drehartige Wärmeaustauscheinrichtung, die Folgendes umfasst:
eine Wärmeaustauschdrehscheibe (200,100), die angeordnet ist, von einer Drehscheibenantriebsvorrichtung (110) angetrieben zu werden, und umfassend zwei wärmeleitende poröse Flächen, die angeordnet sind, das Durchströmen eines Kühlfluids durch die Wärmeaustauschdrehscheibe (200, 100) zu ermöglichen und Wärme mit der Wärmeaustauschdrehscheibe (200, 100) auszutauschen;
eine umkehrbare Stromkreislauffluidpumpvorrichtung (123), die wenigstens zwei Fluidpumpen (120a, 120b) umfasst, die angeordnet sind, das Kühlfluid durch die Wärmeaustauchdrehscheibe (200, 100) zu pumpen;
einen ersten Fluidströmungspfad, umfassend erste Fluidanschlüsse (a, b), die angeordnet sind, das Strömen des Kühlfluids durch die Wärmeaustauschdrehscheibe (200, 100) in einer ersten Richtung zu ermöglichen;
einen zweiten Fluidströmungspfad, umfassend zweite Fluidanschlüsse (c, d), die angeordnet sind, das Strömen des Kühlfluids durch die Wärmeaustauschdrehscheibe (200, 100) in einer zweiten Richtung, entgegen der ersten Richtung, zu ermöglichen;
eine Steuervorrichtung (250), die angeordnet ist, ein Erfassungssignal von einem Detektor zu empfangen und die Rotationsgeschwindigkeit der Wärmeaustauschdrehscheibe auf Grundlage der durch den Detektor erkannten Zustände automatisch zu steuern; **dadurch gekennzeichnet, dass** der innerhalb des Wärmeaustauschers positionierte Detektor angeordnet ist, den Zustand des in den Wärmeaustauscher durchströmenden Kühlfluids zu erfassen, wobei der Detektor eine Erfassungsvorrichtung (31) für Fluidzusammensetzung in einem gasförmigen oder flüssigen Zustand, und einen Detektor umfasst, der aus i) einem Temperaturdetektor; und/oder ii) einem Feuchtigkeitsdetektor (21) ausgewählt ist.

2. Drehartige Wärmeaustauscheinrichtung nach Anspruch 1, wobei die Fluidpumpen (120a)(120b) entsprechend mit den ersten Fluidanschlüssen (a, b) und den zweiten Fluidanschlüssen (c, d) eingebaut sind und fähig sind, Unterdruck oder Überdruck zu erzeugen, um eine umkehrbare Stromkreislauffluidpumpvorrichtung (123) darzustellen; wobei die Fluidpumpen (120a)(120b) entsprechend individuell von einem Elektromotor angetrieben werden oder gemeinsam von demselben Motor angetrieben werden, wobei die Einrichtung ferner Folgendes umfasst:
eine Energiequelle (300), um Energie für den Betrieb der drehartigen Wärmeaustauscheinrichtung mit automatischer Austauschströmungsratenmodulierung bereitzustellen.

3. Drehartige Wärmeaustauscheinrichtung nach Anspruch 1 oder 2, wobei die Temperaturerfassungsvorrichtung (11) an einer Position eingebaut ist, die fähig ist, die Temperaturvariation des Pumpenaustauschfluids direkt oder indirekt zu erfassen, wobei das erfasste Signal als der Betriebssteuerungszeitablauf für die Betriebssteuerungsvorrichtung (250) festgelegt ist; einschließlich: 1) betriebsfähiges Steuern der Strömungsrate des Austauschfluids, das von der umkehrbaren Stromkreislauffluidpumpvorrichtung (123) gepumpt wird; und/oder 2) betriebsfähiges Steuern der Drehzahl der drehartigen Wärmeaustauschdrehscheibe (100), die von der Antriebsvorrichtung (110) angetrieben wird, die die Drehscheibe drehend antreibt.

4. Drehartige Wärmeaustauscheinrichtung nach einem der vorhergehenden Ansprüche, wobei die Strukturarten der drehartigen Wärmeaustauschdrehscheibe oder der drehartigen Gesamtwärmeaustauschdrehscheibe die folgenden Eigenschaften einschließen: 1) eine röhrenförmige Struktur in einer linearen oder einer anderen geometrischen Form; 2) eine mehrschichtige Struktur, die von den Fluidkreisläufen in einem gasförmigen oder flüssigen Zustand festgelegt ist; und/oder 3) einer oder mehrere Fluidkreisläufe, die in Reihe verbunden sind, parallel verbunden sind, oder in Reihe und parallel verbunden sind.

5. Drehartige Wärmeaustauscheinrichtung mit automatischer Strömungsratenaustauschmodulierung nach einem der vorhergehenden Ansprüche, wobei der Fluidströmungsratenbetriebssteuerungsbereich beim Festlegen der Strömungsratenbetriebssteuerungsfunktion einschließt, dass:
die abgestuften oder stufenlosen Fluidströmungsratenmodulierungen von dem Übertragungsstopp bis zur maximalen Übertragungsrate auf Grundlage einer Änderung der Fluidströmungsrate durch eine oder mehrere der folgenden Vorrichtungen geschieht, wobei es Folgendes einschließt:
betriebsfähiges Steuern der Pumpgeschwindigkeit der umkehrbaren Stromkreislauffluidpumpvorrichtung (123) innerhalb des Bereichs von dem Übertragungsstopp bis zur maximalen Übertragungsrate, um ferner die Fluidströmungsrate betriebsfähig zu steuern; und/oder
Einbauen der Doppelstromkreislauffluidpumpvorrichtung (123) mit betriebsfähig steuerbaren Fluideinlass-/Fluidauslassventilen, um das Öffnen der Fluideinlass-/Fluidauslassventile der Doppelstromkreislauffluidpumpvorrichtung (123) betriebsfähig zu steuern, um ferner die Fluidströmungsrate betriebsfähig zu steuern.

6. Drehartige Wärmeaustauscheinrichtung mit automatischer Strömungsratenaustauschmodulierung nach einem der vorhergehenden Ansprüche, wobei ein Strömungsratenverhältnis zwischen den zwei Fluidströmen zum Durchströmen durch die drehartige Wärmeaustauscheinrichtung (1000) während des Betriebs einen oder mehrere Verhältnismodi einschließt:
die Strömungsrate von Fluid in einem Stromkreislauf ist größer als die in dem anderen Stromkreislauf;
die Strömungsraten der Fluide in beiden Stromkreisläufen sind gleich;
zwei Fluidpumpen in unterschiedlichen Pumpströmungsrichtungen werden alternativ betrieben, um alternativ die zwei Fluidströme in einander entgegengesetzte Strömungsrichtungen zu pumpen.

## Revendications

1. Appareil d'échange thermique de type rotatif comprenant :
un disque rotatif à échange thermique (200, 100), conçu pour être entraîné par un dispositif d'entraînement de disque rotatif (110), et comprenant deux zones poreuses thermiquement conductrices conçues pour permettre à un fluide de refroidissement de passer à travers le disque rotatif à échange thermique (200, 100) et échanger de la chaleur avec le disque rotatif à échange thermique (200, 100) ;
un dispositif de pompage de fluide à circuit d'écoulement réversible (123), comprenant au moins deux pompes à fluide (120a, 120b) conçues pour pomper le fluide de refroidissement à travers le disque rotatif à échange thermique (200, 100) ;
un premier trajet d'écoulement de fluide, comprenant de premiers orifices à fluide (a, b) conçus pour permettre au fluide de refroidissement de s'écouler à travers le disque rotatif à échange thermique (200, 100) dans un premier sens ;
un second trajet d'écoulement de fluide, comprenant de seconds orifices à fluide (c, d) conçus pour permettre au fluide de refroidissement de s'écouler à travers le disque rotatif à échange thermique (200, 100) dans un second sens, opposé au premier sens ;
un dispositif de commande (250) conçu pour recevoir un signal de détection provenant d'un détecteur et pour commander automatiquement la vitesse de rotation du disque rotatif à échange thermique en fonction des conditions détectées par le détecteur ; **caractérisé en ce que** le détecteur disposé à l'intérieur de l'échangeur thermique est conçu pour détecter l'état du fluide de refroidissement qui passe vers l'échangeur thermique, le détecteur comprenant un dispositif de détection de composition de fluide à l'état gazeux ou liquide (31), et un détecteur choisi parmi i) un détecteur de température ; et/ou ii) un détecteur d'humidité (21).

2. Appareil d'échange thermique de type rotatif selon la revendication 1, dans lequel les pompes à fluide (120a, 120b) sont respectivement installées parmi les premiers orifices à fluide (a, b) et les seconds orifices à fluide (c, d), et sont capables de produire une pression négative ou une pression positive pour constituer un dispositif de pompage de fluide à circuit d'écoulement réversible (123) ; lesdites pompes à fluide (120a, 120b) étant chacune entraînées respectivement par un moteur électrique ou entraînées conjointement par un même moteur, l'appareil comprenant en outre :
une source d'électricité (300) pour fournir de l'électricité pour le fonctionnement de l'appareil d'échange thermique de type rotatif avec modulation automatique du débit d'échange.

3. Appareil d'échange thermique de type rotatif selon la revendication 1 ou 2, dans lequel le dispositif de détection de température (11) est installé à un emplacement permettant de détecter directement ou indirectement la variation de température du fluide d'échange par pompage, le signal détecté étant appelé synchronisation de commande opérationnelle pour le dispositif de commande opérationnelle (250) ; comprenant : 1) la commande opérationnelle du débit du fluide d'échange pompé par le dispositif de pompage de fluide à circuit d'écoulement réversible (123) ; et/ou 2) la commande opérationnelle de la vitesse de rotation du disque rotatif à échange thermique de type rotatif (100) entraîné par le dispositif d'entraînement en rotation de disque rotatif (110).

4. Appareil d'échange thermique de type rotatif selon l'une quelconque des revendications précédentes, dans lequel les types structurels du disque rotatif à échange thermique de type rotatif ou le disque rotatif à échange thermique total de type rotatif comprennent une ou plusieurs des caractéristiques suivantes : 1) une structure tubulaire de forme linéaire ou d'une autre forme géométrique ; ou 2) une structure multicouche constituée par les circuits de fluide à l'état gazeux ou liquide ; ou 3) un ou plusieurs circuits de fluide raccordés en série, en parallèle ou en série et en parallèle.

5. Appareil d'échange thermique de type rotatif avec modulation automatique de l'échange de débit selon l'une quelconque des revendications précédentes, dans lequel, lors du paramétrage de la fonction de commande opérationnelle du débit, la plage de commande opérationnelle du débit de fluide comprend :
les modulations échelonnées ou continues de débit de fluide, depuis l'arrêt du transfert jusqu'au débit de transfert maximal, dépendant d'un ou plusieurs des dispositifs suivants pour modifier le débit de fluide, comprenant :
la commande opérationnelle de la vitesse de pompage du dispositif de pompage de fluide à circuit d'écoulement réversible (123) dans la plage allant de l'arrêt du transfert au débit de transfert maximal pour commander davantage de manière opérationnelle le débit de fluide ; et/ou
l'installation, sur le dispositif de pompage de fluide à circuit d'écoulement double (123), de vannes d'entrée/sortie de fluide pouvant être commandées de manière opérationnelle afin de commander de manière opérationnelle l'ouverture des vannes d'entrée/sortie de fluide du dispositif de pompage de fluide à circuit d'écoulement double (123) en vue de contrôler davantage de manière opérationnelle le débit de fluide.

6. Appareil d'échange thermique de type rotatif avec modulation automatique de l'échange de débit selon l'une quelconque des revendications précédentes, dans lequel un rapport de débit entre les deux courants de fluide pour traverser l'appareil d'échange thermique de type rotatif (1000) pendant le fonctionnement comprend un ou plusieurs des modes de rapport suivants :
le débit de fluide dans un circuit d'écoulement est supérieur à celui de l'autre circuit d'écoulement ;
les débits de fluide dans les deux circuits d'écoulement sont identiques ;
deux pompes à fluide dans des sens d'écoulement de pompage différents fonctionnent alternativement pour pomper alternativement les deux courants de fluide dans des sens d'écoulement opposés.
